# EUROPÄISCHE PATENTANMELDUNG

(11) **EP 1 266 800 A2**
(43) Veröffentlichungstag der Anmeldung: **18.12.2002**
(21) Anmeldenummer: 02008790.4
(22) Anmeldetag: 19.04.2002
(51) Int. Cl.: B60R 16/02

(54) **Fremdstartvorrichtung, Fremdstarterkennungsvorrichtung und Fremdstarterkennungsverfahren**

(30) Priorität: 15.06.2001 DE 10128966
(71) Anmelder: AUDI AG, 85045 Ingolstadt (DE)
(72) Erfinder: Wolf, Norbert, 85055 Ingolstadt (DE); Winkler, Josef, 85110 Kipfenberg (DE); Konrad, Peter, 38106 Braunschweig (DE)
(74) Vertreter: Thielmann, Frank

(57) **Zusammenfassung**

Die Erfindung betrifft eine Fremdstartvorrichtung zum Fremdstarten eines Kraftfahrzeugs mit einer Anschlußeinheit (12) für ein kraftfahrzeugfremdes Starthilfepluskabel, wobei die Fremdstartvorrichtung (10) eine Abdeckeinheit (16) aufweist, die in eine geschlossene und in eine geöffnete Position überführbar ist, wobei die Abdeckeinheit (16) die Anschlußeinheit (12) in der geschlossenen Position, unabhängig von einem Öffnungszustand von Karosserieelementen des Kraftfahrzeugs, derartig abdeckt, daß die Anschlußeinheit (12) nicht mit dem kraftfahrzeugfremden Starthilfepluskabel verbindbar ist, wobei die Abdeckeinheit (16) in der geöffneten Position derartig angeordnet ist, daß die Anschlußeinheit (12) mit dem kraftfahrzeugfremden Starthilfepluskabel verbindbar ist, wobei die Fremdstartvorrichtung (10) ein Kontrollelement (20) aufweist, durch das die geschlossene und/oder die geöffnete Position der Abdeckeinheit (16) detektierbar ist. Die Erfindung betrifft außerdem eine Fremdstarterkennungsvorrichtung zur Erkennung eines Fremdstarts in einem Kraftfahrzeug (32) und ein entsprechendes Fremdstarterkennungsverfahren.

## Beschreibung

Die Erfindung betrifft eine Fremdstartvorrichtung zum Fremdstarten eines Kraftfahrzeugs mit einer Anschlußeinheit für ein kraftfahrzeugfremdes Starthilfepluskabel. Die Erfindung betrifft auch eine Fremdstarterkennungsvorrichtung zur Erkennung eines Fremdstarts in einem Kraftfahrzeug und ein entsprechendes Fremdstarterkennungsverfahren.

Eine gattungsgemäße Fremdstartvorrichtung ist aus der DE 198 47 669 bekannt. Die hier beschriebene Fremdstartvorrichtung weist separate Anschlußeinheiten für kraftfahrzeugfremde Starthilfekabel auf, wobei die Anschlußeinheiten über elektrische Leitungen mit einer Batterie elektrisch verbunden sind. Eine erste Anschlußeinheit ist mit dem Pluspol der Batterie verbunden, während die zweite Anschlußeinheit mit der elektrischen Masse elektrisch verbunden ist. Ist die Batterie leer, kann über die beiden Anschlußeinheiten eine fahrzeugfremde Batterie angeschlossen werden und so einen Start des Fahrzeugs sichern.

Heutige und zukünftige sicherheitsrelevante elektrische Fahrzeugsysteme, wie Lenkungs- und Bremssysteme haben elektrische Anforderungen, die aufgrund hoher Dynamik und Spitzenleistung von herkömmlichen Generatoren nicht zu bedienen sind. Eine Batterieunterstützung ist daher für diese Systeme zwingend erforderlich. Um Notlaufstrategien für diese sicherheitsrelevanten Fahrzeugsysteme bereitzustellen, ist die Kenntnis über den Zustand der Fahrzeugbatterie unentbehrlich. Eine sichere Batteriediagnose während der Fahrt, also bei laufendem Generator, ist jedoch aufgrund unterschiedlichster Parameter derzeit nur unter hohem Aufwand umsetzbar. In vielen Fällen ist es jedoch ausreichend zu wissen, ob die Batterie in einem Zustand ist, in dem sie einen Start des Motors ermöglicht hat.

Es ist daher Aufgabe der Erfindung, eine Vorrichtung und ein Verfahren bereitzustellen, mit der bzw. mit dem festgestellt werden kann, ob ein Kraftfahrzeug möglicherweise fremdgestartet wurde.

Eine erste Lösung dieser Aufgabe stellt eine gattungsgemäße Fremdstartvorrichtung dar, die eine Abdeckeinheit aufweist, die in eine geschlossene und in eine geöffnete Position überführbar ist, wobei die Abdeckeinheit die Anschlußeinheit in der geschlossenen Position, unabhängig von einem Öffnungszustand von Karosserieelementen des Kraftfahrzeugs, derartig abdeckt, daß die Anschlußeinheit nicht mit dem kraftfahrzeugfremden Starthilfepluskabel verbindbar ist, wobei die Abdeckeinheit in der geöffneten Position derartig angeordnet ist, daß die Anschlußeinheit mit dem kraftfahrzeugfremden Starthilfepluskabel verbindbar ist, wobei die Fremdstartvorrichtung ein Kontrollelement aufweist, durch das die geschlossene und/oder die geöffnete Position der Abdeckeinheit detektierbar ist. Auf diese Weise kann jederzeit überprüft werden, ob sich die Abdeckeinheit in der geöffneten oder der geschlossenen Position befindet, so daß festgestellt werden kann, ob ein Starthilfepluskabel an die Anschlußeinheit angeschlossen werden konnte und damit die Möglichkeit eines Fremdstarts bestand.

Eine erste besonders vorteilhafte Weiterbildung der Erfindung sieht vor, daß das Kontrollelement und die Abdeckeinheit einstückig ausgebildet sind. Dadurch wird ein äußerst einfacher Aufbau gewährleistet.

Das Kontrollelement kann in einer weiteren Ausgestaltung der Erfindung als elektronischer Kontakt ausgebildet sein, der beispielsweise nur in der geschlossenen Position der Abdeckeinheit elektrisch leitend mit der Anschlußeinheit verbunden ist. Außerdem kann das Kontrollelement einen mechanischen Schalter und/oder eine Lichtschranke umfassen.

Vorteilhafterweise kann das Kontrollelement derartig ausgebildet sein, daß durch das Kontrollelement ein Signal erzeugbar ist, wenn die Abdeckeinheit in die geschlossene und/oder in die geöffnete Position überführt wird. Dieses Signal kann an eine Diagnoseeinheit der erfindungsgemäßen Fremdstartvorrichtung übermittelbar sein.

Eine weitere besonders vorteilhafte Ausgestaltung der Erfindung sieht vor, daß das Kontrollelement und/oder die Diagnoseeinheit eine Speichereinheit aufweist, in der das Signal und ein Zeitpunkt, an dem das Signal erzeugt wurde, speicherbar ist. Auf diese Weise kann überprüft werden, ob zu irgendeinem Zeitpunkt in der Vergangenheit möglicherweise ein Fremdstart durchgeführt wurde.

Die Anschlußeinheit kann von einem Pluspol einer Starterbatterie des Kraftfahrzeugs gebildet werden, sie kann aber auch ein separater Fremdstartanschluß sein, der räumlich getrennt von dem Pluspol der Starterbatterie des Kraftfahrzeugs angeordnet ist. Jedes Kraftfahrzeug, das durch Anschluß von kraftfahrzeugfremden Starthilfekabeln mit einer fremden Stromquelle verbunden und gestartet werden kann, weist auch eine Anschlußeinheit im Sinne der Erfindung auf. Die erfindungsgemäße Fremdstartvorrichtung ist daher in die unterschiedlichsten Fahrzeugkonfigurationen integrierbar.

Eine zweite Lösung der obigen Aufgabe stellt eine Fremdstarterkennungsvorrichtung zur Erkennung eines Fremdstarts in einem Kraftfahrzeug dar, die neben einem Motor und einer Anschlußeinheit für ein kraftfahrzeugfremdes Starthilfepluskabel umfaßt:
- eine Fremdanschlußüberprüfungseinheit, durch die feststellbar ist, ob das kraftfahrzeugfremde Starthilfepluskabel Zugang zu der Anschlußeinheit hat,
- eine Klemme-50-Signal-Detektionseinheit zur Ermittlung, ob und wann ein Klemme-50-Signal erzeugt wird,
- eine Motorüberprüfungseinheit zur Überprüfung, ob eine Drehzahl des Motors von 0 auf > 0 überführt wird, und
- eine Diagnoseeinheit, die derart mit der Fremdanschlußüberprüfungseinheit, der Klemme-50-Signal-Detektionseinheit und der Motorüberprüfungseinheit verbunden ist, daß durch die Diagnoseeinheit ein Fremdstart feststellbar ist,
wenn die Drehzahl des Motors von 0 auf > 0 überführt wird und vorher kein zeitlich korreliertes Klemme-50-Signal erzeugt wurde, oder, wenn einerseits die Drehzahl des Motors von 0 auf > 0 überführt wird und/oder ein Klemme-50-Signal-erzeugt wird und andererseits gleichzeitig das kraftfahrzeugfremde Starthilfepluskabel Zugang zu der Anschlußeinheit hat.

Dem liegt die Erkenntnis zugrunde, daß bei einem Fremdstart im Sinne der Erfindung zwischen zwei Fällen unterschieden werden kann. Ein Fremdstart kann danach etwa erreicht werden, indem ein Fahrzeug angeschoben, durch ein Zweitfahrzeug angezogen oder durch Hinabrollen von einer Anhöhe in Bewegung gebracht wird. Dieser Fall des Fremdstarts kann dadurch erkannt werden, daß die Drehzahl des Motors von 0 auf >0 überführt wird, ohne daß vorher ein Starter im Eingriff war, das heißt, ohne daß vorher ein zeitlich korreliertes Klemme-50-Signal erzeugt wurde. Ein zweiter Fall des Fremdstarts liegt vor, wenn eine fahrzeugfremde Batterie an die eigene Starterbatterie angeschlossen wird, um den Startvorgang zu ermöglichen. Dies kann erkannt werden, wenn das kraftfahrzeugfremde Starthilfepluskabel Zugang zu der Anschlußeinheit hat und gleichzeitig ein Motorstart festgestellt wird. Der Motorstart wird entweder über das Klemme-50-Signal oder über die Überführung der Drehzahl des Motors von 0 auf > 0 erkannt. Durch die erfindungsgemäße Fremdstarterkennungsvorrichtung können folglich beide Fälle des Fremdstarts erkannt werden, so daß bei der Feststellung eines Fremdstarts durch die erfindungsgemäße Fremdstarterkennungsvorrichtung davon ausgegangen werden kann, daß die Starterbatterie des Fahrzeugs nicht fähig war, den Startvorgang ausreichend zu unterstützen.

Als Fremdanschlußüberprüfungseinheit kann die erfindungsgemäße, oben beschriebene Fremdstartvorrichtung eingesetzt werden. Für den Fall, daß sich die Anschlußeinheit für das kraftfahrzeugfremde Starthilfepluskabel unter der Motorhaube des Kraftfahrzeugs befindet, kann die Fremdanschlußüberprüfungseinheit einen Motorhaubenschalter zur Überprüfung, ob sich eine Motorhaube des Kraftfahrzeugs in einer geöffneten oder einer geschlossenen Stellung befindet, umfassen. Diese Ausgestaltung der Erfindung ist besonders vorteilhaft, wenn ein solcher Motorhaubenschalter bereits in einem Kraftfahrzeug vorgesehen ist.

Ist die Anschlußeinheit im Kofferraum angeordnet, kann die Fremdanschlußüberprüfungseinheit auch einen Kofferraumdeckelschalter zur Überprüfung, ob sich ein Kofferraumdeckel des Kraftfahrzeugs in einer geöffneten oder in einer geschlossenen Stellung befindet, umfassen.

Ist als Anschlußeinheit ein Pol einer Batterie vorgesehen, die sich in einem Batteriekasten befindet, kann die Fremdanschlußeinheit alternativ oder zusätzlich einen Batteriekastenschalter zur Überprüfung, ob sich der Batteriekasten des Kraftfahrzeugs in einer geöffneten oder in einer geschlossenen Stellung befindet, umfassen.

Eine weitere Lösung der obigen Aufgabe stellt ein Fremdstarterkennungsverfahren zur Erkennung eines Fremdstarts in einem Kraftfahrzeug dar, wobei das Kraftfahrzeug einen Motor und eine Anschlußeinheit für ein kraftfahrzeugfremdes Starthilfepluskabel aufweist, und wobei das Fremdstarterkennungsverfahren folgende Schritte umfaßt:
a) Ermitteln, ob und wann ein Klemme-50-Signal erzeugt wird;
b) Ermitteln, ob eine Drehzahl des Motors von 0 auf > 0 überführt wird;
c) Ermitteln, ob das kraftfahrzeugfremde Starthilfepluskabel Zugang zu der Anschlußeinheit hat; und
d) Feststellen eines Fremdstarts,
wenn die Drehzahl des Motors von 0 auf > 0 überführt wird und vorher kein zeitlich korreliertes Klemme-50-Signal erzeugt wurde, oder wenn einerseits die Drehzahl des Motors von 0 auf > 0 überführt wird und/oder ein Klemme-50-Signal erzeugt wird und andererseits gleichzeitig das kraftfahrzeugfremde Starthilfepluskabel Zugang zu der Anschlußeinheit hat.

Vorteilhafterweise kann in einer Ausgestaltung der Erfindung eine Notlaufmaßnahme eingeleitet werden, wenn in Schritt d) ein Fremdstart festgestellt wird. Diese Notlaufmaßnahme kann beispielsweise einen Schritt umfassen, in dem mindestens ein Verbraucher in dem Kraftfahrzeug von einem Betriebszustand in einen anderen Betriebszustand mit niedrigerem Stromverbrauch oder in einen "Aus"-Zustand überführt wird. Auf diese Weise kann die Belastung der Starterbatterie verringert werden, so daß diese zur Unterstützung von sicherheitsrelevanten Fahrzeugsystemen bereit steht.

Weitere Vorteile gehen aus den im folgenden unter Hinweis auf die Zeichnungen beschriebenen Ausführungsbeispielen hervor. Es zeigen:
- Fig. 1: eine schematische Darstellung eines Querschnitts einer Ausführungsform einer erfindungsgemäßen Fremdstartvorrichtung; und
- Fig. 2: eine schematisch dargestellte Ausführungsform einer erfindungsgemäßen Fremdstarterkennungsvorrichtung in einem Kraftfahrzeug.

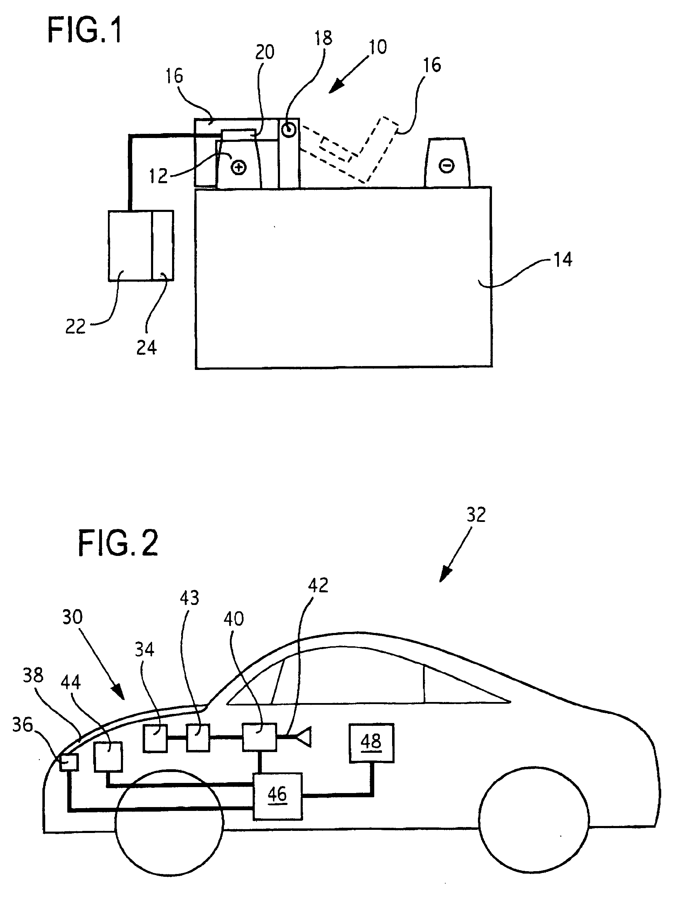

In Figur 1 ist eine Ausführungsform einer erfindungsgemäßen Fremdstartvorrichtung 10 schematisch im Querschnitt dargestellt. Diese Ausführungsform umfaßt eine Anschlußeinheit 12 für ein kraftfahrzeugfremdes Starthilfepluskabel, die von einem Pluspol einer Starterbatterie 14 gebildet wird. Außerdem weist die Fremdstartvorrichtung 10 eine Abdeckeinheit 16 auf, die in eine geschlossene Position (durchgezogene Linien) und in eine geöffnete Position (gestrichelte Linien) überführt werden kann. In der geschlossenen Position deckt die Abdeckeinheit 16 die Anschlußeinheit 12 derartig ab, daß das Starthilfepluskabel nicht mit der Anschlußeinheit 12 verbunden werden kann. Durch Drehung um die Achse 18 wird die Abdeckeinheit 16 in die geöffnete Position überführt, in der das Starthilfepluskabel leicht mit der Anschlußeinheit 12 in Kontakt gebracht werden kann. Die Fremdstartvorrichtung 10 weist außerdem ein Kontrollelement 20 auf, das in der hier beschriebenen Ausführungsform als elektronischer Kontakt ausgebildet ist, der in der geschlossenen Position der Abdeckeinheit 16 mit der Anschlußeinheit 12 in elektrisch leitender Verbindung steht. Wird die Abdeckeinheit 16 von der geschlossenen Position in die geöffnete Position überführt, erzeugt das Kontrollelement 20 ein Öffnungssignal, das an eine Diagnoseeinheit 22 übertragen wird. Wird die Abdeckeinheit 16 von der geöffneten Position in die geschlossene Position gebracht, erzeugt das Kontrollelement 20 ein Schließungssignal, das wie das Öffnungssignal an die Diagnoseeinheit 22 übermittelt wird und dort in einer Speichereinheit 24 abgelegt wird. In der Speichereinheit 24 kann sowohl der Zeitpunkt gespeichert werden, an dem das Öffnungssignal erzeugt wurde, als auch jener Zeitpunkt, an dem das Schließungssignal erzeugt wurde.

In einer alternativen, nicht dargestellten Ausführungsform der erfindungsgemäßen Fremdstartvorrichtung ist die Abdeckeinheit als Kappe ausgebildet, die auf einen Pluspol einer Batterie aufgesetzt werden kann. Auch in diese Kappe kann ein Kontrollelement integriert werden, das in dem aufgesetzten Zustand der Kappe in elektrisch leitender Verbindung mit dem Pluspol der Batterie steht.

In einer alternativen Ausführungsform kann das Kontrollelement als mechanisch bedienbarer Schalter ausgebildet sein, der betätigt wird, wenn die Abdeckeinheit in die geöffnete und/oder in die geschlossene Position überführt wird.

Sind in einem Fahrzeug separate Fremdstartanschlüsse zur Verbindung mit Starthilfekabeln vorgesehen, so bildet derjenige separate Fremdstartanschluß die Anschlußeinheit, der mit einem kraftfahrzeugfremden Starthilfepluskabel verbunden wird. Die Abdeckeinheit der erfindungsgemäßen Fremdstartvorrichtung kann auch in diesem Fall analog den obigen Ausführungsformen ausgebildet sein.

In Figur 2 ist eine Ausführungsform einer erfindungsgemäßen Fremdstarterkennungsvorrichtung 30 in einem Kraftfahrzeug 32 dargestellt. Das Kraftfahrzeug 32 weist eine Anschlußeinheit für ein kraftfahrzeugfremdes Starthilfepluskabel auf, die in der vorliegenden Ausführungsform von der Starterbatterie 34 gebildet wird. Die erfindungsgemäße Fremdstarterkennungsvorrichtung 30 weist weiterhin einen Motorhaubenschalter 36 auf, durch den feststellbar ist, ob die Motorhaube 38 geöffnet oder geschlossen ist, ob also das kraftfahrzeugfremde Starthilfepluskabel Zugang zu der Starterbatterie 34 hat oder nicht. Die erfindungsgemäße Fremdstarterkennungsvorrichtung 30 umfaßt weiterhin eine Klemme-50-Signal-Detektionseinheit 40, die innerhalb einer elektrischen Leitung 42 zwischengeschaltet ist, wobei die Leitung 42 das Klemme-50-Signal auf den Starter 43 überträgt, der über eine Starterleitung mit der Starterbatterie 34 verbunden ist. Außerdem umfaßt die in Figur 2 dargestellte Ausführungsform eine Motorüberprüfungseinheit 44 zur Überprüfung, ob eine Drehzahl eines hier nicht dargestellten Motors von 0 auf > 0 überführt wird. Diese Motorüberprüfungseinheit 44 ist genau wie der Motorhaubenschalter 36 und die Klemme-50-Signal-Detektionseinheit 40 mit einer Diagnoseeinheit 46 verbunden. Aufgrund dieser Verbindung kann durch die Diagnoseeinheit 46 festgestellt werden, ob das Kraftfahrzeug 32 fremdgestartet wurde. Ein Fremdstart wird nämlich dann diagnostiziert, wenn durch die Motorüberprüfungseinheit 44 festgestellt wird, daß eine Drehzahl des Motors von 0 auf > 0 überführt wird, ohne daß vorher durch die Klemme-50-Signal-Detektionseinheit 40 ein zeitlich korrespondierendes Klemme-50-Signal ermittelt werden konnte. Ein Fremdstart wird ebenfalls durch die Diagnoseeinheit 46 diagnostiziert, wenn durch die Motorüberprüfungseinheit 44 festgestellt werden kann, daß der Motor von 0 auf > 0 überführt wird und/oder wenn durch die Klemme-50-Signal-Detektionseinheit 40 ein Klemme-50-Signal detektiert wird, während gleichzeitig die Motorhaube 38 geöffnet ist, so daß ein Zugang zur Starterbatterie 34 besteht. Wird durch die Diagnoseeinheit 46 schließlich ein solcher Fremdstart festgestellt, wird eine Notlaufmaßnahmesteuereinheit 48 aktiviert, die daraufhin verschiedene Notlaufmaßnahmen einleitet. Beispielsweise können verschiedene Komfortgeräte oder andere Steuergeräte des Kraftfahrzeugs 32 ausgeschaltet werden oder in einen Betriebszustand versetzt werden, der nur einen sehr geringen Stromverbrauch besitzt. Gegebenenfalls kann auch ein Warnsignal generiert wird, das den Fahrer des Kraftfahrzeugs 32 über den geänderten Betriebszustand der Komfortgeräte oder der anderen Steuergeräte informiert. Dies ist insbesondere dann sinnvoll, wenn dadurch auch sicherheitsrelevante Steuerungen wie das ESP betroffen sind.

Alternativ kann bei entsprechender Modifikation der Fremdstarterkennungsvorrichtung 30 auch anstelle des Motorhaubenschalters 36 eine erfindungsgemäße Fremdstartvorrichtung nach einer der oben beschriebenen Ausführungsformen eingesetzt werden. Dies hat insbesondere den Vorteil, daß die Diagnose eines Fremdstarts mit einem geringeren Fehler behaftet ist, da der Öffnungszustand der Motorhaube 38 weniger darüber aussagt, ob ein Starthilfepluskabel möglicherweise angeschlossen ist oder nicht, als der Öffnungszustand einer extra für diesen Zweck vorgesehenen Abdeckeinheit. Je nach Position der Anschlußeinheit kann anstelle des Motorhaubenschalters auch ein Kofferraumdeckelschalter oder ein Batteriekastenschalter vorgesehen sein.

Weitere Veränderungen, Modifikationen oder Kombinationen der oben beschriebenen Ausführungsformen sind für den Fachmann ebenfalls offensichtlich und fallen damit ebenso unter den Schutzumfang der beigefügten Ansprüche.

## Patentansprüche

1. Fremdstartvorrichtung zum Fremdstarten eines Kraftfahrzeugs mit einer Anschlußeinheit (12) für ein kraftfahrzeugfremdes Starthilfepluskabel,
**dadurch gekennzeichnet,**
**daß** die Fremdstartvorrichtung (10) eine Abdeckeinheit (16) aufweist, die in eine geschlossene und in eine geöffnete Position überführbar ist, wobei die Abdeckeinheit (16) die Anschlußeinheit (12) in der geschlossenen Position, unabhängig von einem Öffnungszustand von Karosserieelementen des Kraftfahrzeugs, derartig abdeckt, daß die Anschlußeinheit (12) nicht mit dem kraftfahrzeugfremden Starthilfepluskabel verbindbar ist, wobei die Abdeckeinheit (16) in der geöffneten Position derartig angeordnet ist, daß die Anschlußeinheit (12) mit dem kraftfahrzeugfremden Starthilfepluskabel verbindbar ist,
wobei die Fremdstartvorrichtung (10) ein Kontrollelement (20) aufweist, durch das die geschlossene und/oder die geöffnete Position der Abdeckeinheit (16) detektierbar ist.

2. Fremdstartvorrichtung nach Anspruch 1,
**dadurch gekennzeichnet,**
**daß** das Kontrollelement (20) und die Abdeckeinheit (16) einstückig ausgebildet sind.

3. Fremdstartvorrichtung nach einem der vorhergehenden Ansprüche,
**dadurch gekennzeichnet,**
**daß** das Kontrollelement (20) als elektronischer Kontakt ausgebildet ist.

4. Fremdstartvorrichtung nach Anspruch 3,
**dadurch gekennzeichnet,**
**daß** der elektronische Kontakt nur in der geschlossenen Position der Abdeckeinheit (16) elektrisch leitend mit der Anschlußeinheit (12) verbunden ist.

5. Fremdstartvorrichtung nach einem der vorhergehenden Ansprüche,
**dadurch gekennzeichnet,**
**daß** das Kontrollelement (20) derartig ausgebildet ist, daß durch das Kontrollelement (20) ein Signal erzeugbar ist, wenn die Abdeckeinheit (16) in die geschlossene Position und/oder in die geöffnete Position überführt wird.

6. Fremdstartvorrichtung nach Anspruch 5,
**dadurch gekennzeichnet,**
**daß** die Fremdstartvorrichtung (10) eine Diagnoseeinheit (22) aufweist, der das Signal des Kontrollelements (20) übermittelbar ist.

7. Fremdstartvorrichtung nach einem der Ansprüche 5 oder 6,
**dadurch gekennzeichnet,**
**daß** das Kontrollelement (20) und/oder die Diagnoseeinheit (22) eine Speichereinheit (24) aufweist, in der das Signal und ein Zeitpunkt, an dem das Signal erzeugt wurde, speicherbar ist.

8. Fremdstartvorrichtung nach einem der vorhergehenden Ansprüche,
**dadurch gekennzeichnet,**
**daß** die Anschlußeinheit (12) ein Pluspol einer Starterbatterie (14) des Kraftfahrzeugs ist.

9. Fremdstartvorrichtung nach einem der Ansprüche 1 bis 7,
**dadurch gekennzeichnet,**
**daß** die Anschlußeinheit ein separater Fremdstartanschluß ist, der räumlich getrennt von einem Pluspol einer Starterbatterie (14) des Kraftfahrzeugs angeordnet ist.

10. Fremdstarterkennungsvorrichtung zur Erkennung eines Fremdstarts in einem Kraftfahrzeug (32), das einen Motor und eine Anschlußeinheit (34) für ein kraftfahrzeugfremdes Starthilfepluskabel aufweist, umfassend:
- eine Fremdanschlußüberprüfungseinheit (36), durch die feststellbar ist, ob das kraftfahrzeugfremde Starthilfepluskabel Zugang zu der Anschlußeinheit (34) hat,
- eine Klemme-50-Signal-Detektionseinheit (40) zur Ermittlung, ob und wann ein Klemme-50-Signal erzeugt wird,
- eine Motorüberprüfungseinheit (44) zur Überprüfung, ob eine Drehzahl des Motors von 0 auf > 0 überführt wird, und
- eine Diagnoseeinheit (46), die derart mit der Fremdanschlußüberprüfungseinheit (36), der Klemme-50-Signal-Detektionseinheit (40) und der Motorüberprüfungseinheit (44) verbunden ist, daß durch die Diagnoseeinheit (46) ein Fremdstart feststellbar ist,
wenn die Drehzahl des Motors von 0 auf > 0 überführt wird und vorher kein zeitlich korreliertes Klemme-50-Signal erzeugt wurde, oder
wenn einerseits die Drehzahl des Motors von 0 auf > 0 überführt wird und/oder ein Klemme-50-Signal erzeugt wird und andererseits gleichzeitig das kraftfahrzeugfremde Starthilfepluskabel Zugang zu der Anschlußeinheit (34) hat.

11. Fremdstarterkennungsvorrichtung nach Anspruch 10,
**dadurch gekennzeichnet,**
**daß** die Fremdanschlußüberprüfungseinheit eine Fremdstartvorrichtung nach einem der Ansprüche 1 bis 9 umfaßt.

12. Fremdstarterkennungsvorrichtung nach Anspruch 10,
**dadurch gekennzeichnet,**
**daß** die Fremdanschlußüberprüfungseinheit (36)
einen Motorhaubenschalter zur Überprüfung, ob sich eine Motorhaube (38) des Kraftfahrzeugs (32) in einer geöffneten oder in einer geschlossenen Stellung befindet, und/oder
einen Kofferraumdeckelschalter zur Überprüfung, ob sich ein Kofferraumdeckel des Kraftfahrzeugs in einer geöffneten oder in einer geschlossenen Stellung befindet, und/oder
einen Batteriekastenschalter zur Überprüfung, ob sich ein Batteriekasten des Kraftfahrzeugs in einer geöffneten oder in einer geschlossenen Stellung befindet, umfaßt.

13. Fremdstarterkennungsverfahren zur Erkennung eines Fremdstarts in einem Kraftfahrzeug (32), das einen Motor und eine Anschlußeinheit (34) für ein kraftfahrzeugfremdes Starthilfepluskabel aufweist,
umfassend folgende Schritte:
a) Ermitteln, ob und wann ein Klemme-50-Signal erzeugt wird;
b) Ermitteln, ob eine Drehzahl des Motors von 0 auf > 0 überführt wird;
c) Ermitteln, ob das kraftfahrzeugfremde Starthilfepluskabel Zugang zu der Anschlußeinheit (34) hat; und
d) Feststellen eines Fremdstarts,
wenn die Drehzahl des Motors von 0 auf > 0 überführt wird und vorher kein zeitlich korreliertes Klemme-50-Signal erzeugt wurde, oder
wenn einerseits die Drehzahl des Motors von 0 auf > 0 überführt wird und/oder ein Klemme-50-Signal erzeugt wird und andererseits gleichzeitig das kraftfahrzeugfremde Starthilfepluskabel Zugang zu der Anschlußeinheit (34) hat.

14. Fremdstarterkennungsverfahren nach Anspruch 13,
**dadurch gekennzeichnet,**
**daß** eine Notlaufmaßnahme eingeleitet wird, wenn in Schritt d) ein Fremdstart festgestellt wird.

15. Fremdstarterkennungsverfahren nach Anspruch 14,
**dadurch gekennzeichnet,**
**daß** die Notlaufmaßnahme einen Schritt umfaßt, in dem mindestens ein Verbraucher in dem Kraftfahrzeug (32) von einem Betriebszustand in einen anderen Betriebszustand mit niedrigerem Stromverbrauch oder in einen "Aus" -Zustand überführt wird.
